# FASCICULE DE BREVET EUROPEEN

(11) **EP 1 772 660 B1**
(45) Date de publication et mention de la délivrance du brevet: **16.12.2009**
(21) Numéro de dépôt: 06121745.1
(22) Date de dépôt: 04.10.2006
(51) Int. Cl.: F16L 23/032

(54) **Dispositif de liaison à brides**
Flanschverbindungsvorrichtung
Flanged coupling device

(30) Priorité: 05.10.2005 FR 0510169
(43) Date de publication de la demande: 11.04.2007
(73) Titulaire: SNECMA, 75015 Paris (FR)
(72) Inventeur: Magnier, Isabelle, 27940, Notre Dame de l'Isle (FR); Roure, Christian, 27200, VERNON (FR)
(74) Mandataire: Thévenet, Jean-Bruno

(56) Documents cités:
- FR-A- 1 417 502
- FR-A- 2 422 227
- GB-A- 1 085 027
- GB-A- 2 200 179

## Description

### Domaine de l'invention

La présente invention a pour objet un dispositif de liaison étanche précontrainte à brides, comprenant une première bride présentant une première surface de contact, une deuxième bride présentant une deuxième surface de contact située en regard de ladite première surface de contact, un joint d'étanchéité disposé dans un logement de joint ménagé entre lesdites première et deuxième surfaces de contact pour recevoir un joint d'étanchéité et des moyens de serrage des première et deuxième brides disposés entre le logement de joint et la périphérie des première et deuxième brides pour venir mettre en contact entre elles au moins une partie des première et deuxième surfaces de contact.

L'invention concerne plus particulièrement les dispositifs de liaison étanche destinés à être utilisés dans des environnements sévères avec des conditions de fonctionnement extrêmes, notamment sous haute pression, en présence de vibrations, et dans des plages de température très élevées ou au contraire très basses.

### Art antérieur

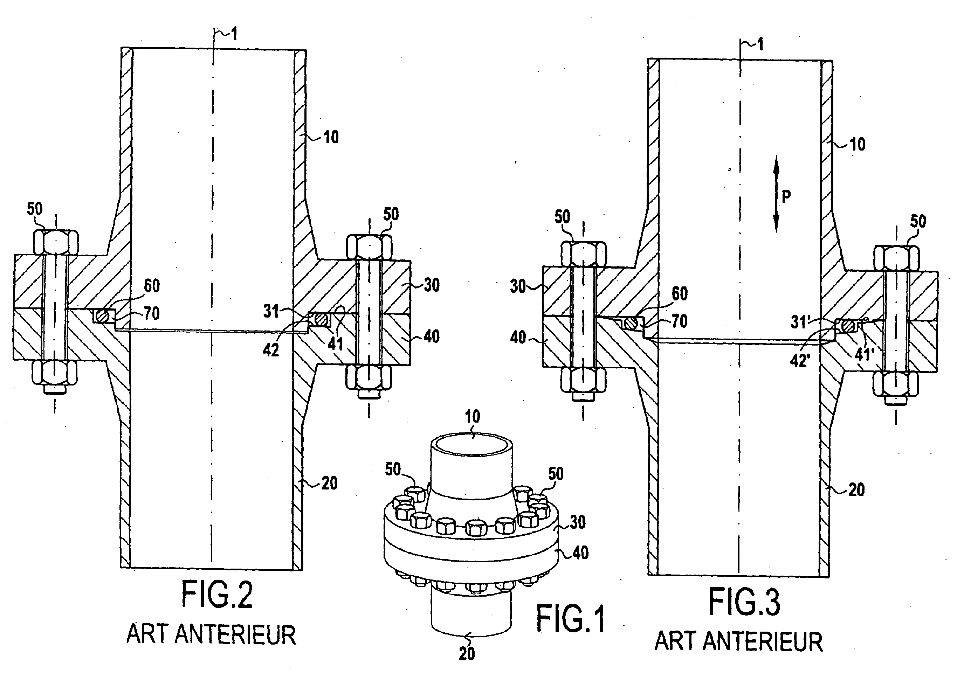

Pour assembler des organes soumis à une pression interne importante, tels que par exemple des moteurs ou tuyauteries utilisés dans le domaine spatial, on utilise fréquemment des liaisons étanches à brides assurant une liaison face-face, comme illustré par exemple sur les Figures 1 à 3.

La Figure 1 montre un exemple de liaison entre deux éléments de tuyauterie 10, 20 munis de brides 30, 40 du type face-face assemblées à l'aide d'organes de liaison 50 tels que des boulons.

La Figure 2 montre, en coupe axiale, la liaison de la Figure 1 dans un état initial, avant qu'une pression soit exercée à l'intérieur des éléments de tuyauterie 10, 20. A cet instant, après serrage des boulons 50, la face plane 31 de la bride plane cylindrique 30 est plaquée contre la face plane 41 de la bride plane cylindrique 40 qui est située en regard de la bride 30. La bride 40 présente un décrochement 42 qui définit un espace libre 70 pour l'insertion d'un joint d'étanchéité 60 qui est ainsi emprisonné entre la face 31 de la bride 30 et le décrochement 42 de la bride 40.

Comme on peut le voir sur la Figure 3, en fonctionnement avec une pression interne P créée par le fluide présent à l'intérieur des éléments de tuyauterie 10, 20, les faces 31' et 41', 42' des brides 30 et 40 se déforment sous l'action du champ de pression interne à la liaison. Il se produit alors une ouverture du logement 70 du joint 60. De ce fait, le joint d'étanchéité 60 se détend et perd une partie de ses performances.

Une telle liaison à brides est connue du document FR-A-1 417 502.

Pour tenter de conserver une étanchéité, il est nécessaire d'utiliser des joints spécifiques à grande restitution utile, qui sont plus compliqués à fabriquer que par exemple des joints tels que ceux décrits dans les documents de brevet EP-A-0 261 350, EP-A-0 711 938 ou EP-A-0 851 258. Ces joints spécifiques, conçus spécialement pour répondre au problème d'ouverture du logement 70, présentent ainsi un coût de production non négligeable.

De plus, l'ouverture et la fermeture répétées du logement 70 dans le cas de fonctionnement avec des cycles "marche/arrêt" répétés, par exemple dans le cas de moteurs-fusées, génère une usure et une fatigue des joints. La relative souplesse d'une liaison du type face-face rend difficile la maîtrise de la durée de vie des systèmes. Une diminution de l'excès de souplesse de cette liaison face-face passe par une augmentation de la masse de la bride, qui est pénalisante notamment dans le domaine spatial.

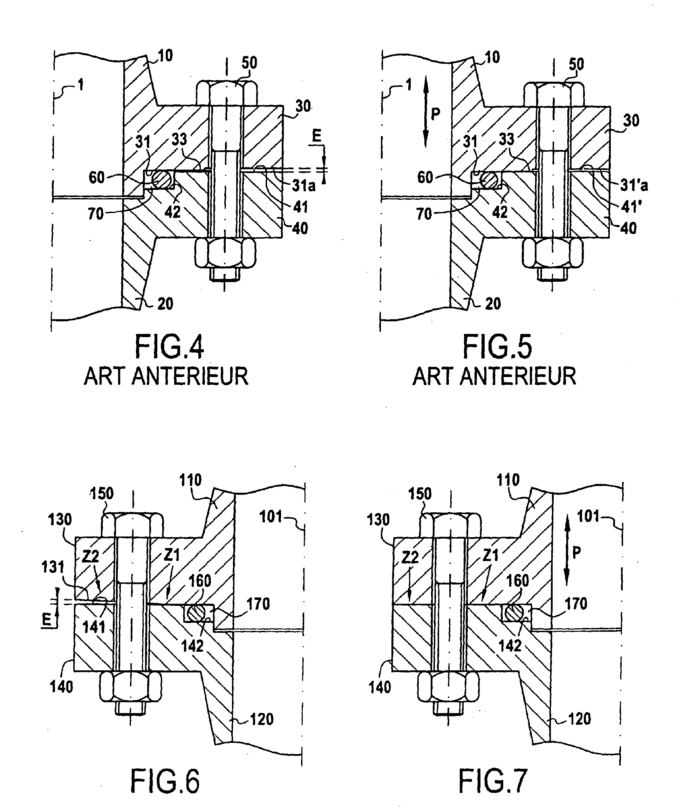

On a encore proposé, comme dans le mode de réalisation illustré sur les Figures 4 et 5, de former un talon 33 sur une face 31 d'une première bride 30 opposée à une face 41 d'une deuxième bride 40, dans une zone située entre le logement de joint 70 contenant un joint d'étanchéité 60, et les moyens de liaison 50 assurant une précontrainte sur les brides annulaires 30, 40 associées aux éléments de canalisation 10, 20 ou autres éléments définissant une enceinte d'axe 1.

Dans ce cas, avant serrage des moyens de liaison 50 et mise en pression interne, il est défini à la périphérie des brides 30, 40, entre la surface 31a de la bride 30 faisant suite au talon 33, et la surface 41 de la bride 40, un espace libre E (Figure 4).

En fonctionnement, après serrage des moyens de liaison et présence d'un champ de pression P à l'intérieur de la canalisation 10, 20, l'espace libre entre la surface 31a' de la bride 30 et la surface 41' de la bride 40 se réduit et permet au talon 33 de la bride 30 de rester en contact avec la surface 41' de la bride 40. Toutefois, à la périphérie des brides 30, 40, l'espace libre entre les surfaces 31a' et 41' ne se referme pas complètement. Ceci conduit à un certain nombre d'inconvénients du fait qu'il existe un risque de pollution dans l'espace libre entre brides et que cet espace libre conduit à un fluage dans le temps qui produit une flexion des plateaux des brides qui ne sont pas maintenues de façon sûre par les éléments de liaison 50, du fait du jeu existant.

### Objet et description succincte de l'invention

L'invention vise à remédier aux inconvénients précités et à réaliser un dispositif de liaison étanche précontrainte à brides qui n'impose pas l'utilisation impérative de joints spécifiques à très forte restitution élastique et qui minimise les risques de pollution ou d'évolution de la liaison lors d'un fonctionnement dans des conditions sévères de température, de pression, de vibrations et d'agression chimique, tout en permettant une réalisation sans surcoût ni augmentation de la masse du dispositif de liaison.

Ces buts sont atteints grâce à un dispositif de liaison étanche précontrainte à brides selon la revendication 1 et un procédé de réalisation correspondant selon la revendication 14.

Le dispositif selon l'invention permet ainsi de maîtriser la déformation des brides qui, dans les dispositifs de l'art antérieur, entraîne un délestage des joints.

Par une minimisation de la déformation des brides au droit du logement du joint, on peut éviter d'avoir recours à des joints spécifiques, à haute restitution utile, performants et coûteux, pour réaliser la fonction d'étanchéité.

Du fait que l'on génère au montage des brides un champ de contrainte de flexion opposé à celui généré lors de la mise en pression de la liaison, on minimise la déformation des brides lors de la mise en pression, en particulier à l'endroit du logement du joint.

Par ailleurs, la présence de deux zones d'appui permet d'éviter les risques de pollution et de détérioration de la liaison en cours d'utilisation, tout en contribuant à maîtriser la rigidité de la liaison à brides et à réduire la fatigue des moyens de liaison en augmentant la fiabilité, sans impliquer de contrainte supplémentaire en ce qui concerne la masse du dispositif de liaison, ni impliquer de surcoût d'usinage.

Selon un aspect de l'invention, avant serrage des moyens de serrage, la distance entre les première et deuxième surfaces de contact au niveau de la deuxième zone d'appui est plus grande que la distance entre les première et deuxième surfaces de contact au niveau de la première zone d'appui.

Selon un premier mode de réalisation possible, les première et deuxième surfaces de contact sont des surfaces continues entre la première et la deuxième zone d'appui.

Ce mode de réalisation est préféré notamment lorsque l'on veut favoriser l'évacuation de la chaleur à travers la liaison à bride.

Selon un autre mode de réalisation possible, au moins l'une des première et deuxième surfaces de contact définit un talon au moins au niveau de l'une des première et deuxième zones d'appui.

Ce mode de réalisation assure une grande maîtrise dans le contrôle des efforts exercés sur les brides et les moyens de liaison.

De façon plus particulière, un dispositif de liaison selon ce mode de réalisation peut être tel que la première surface de contact de la première bride comprend un premier talon formé au niveau de la première zone d'appui et un deuxième talon formé au niveau de la deuxième zone d'appui tandis que la deuxième surface de contact de la deuxième bride présente une surface uniforme continue.

Selon un autre mode de réalisation possible, la première surface de contact de la première bride comprend un premier talon formé au niveau de la première zone d'appui tandis que la deuxième surface de contact de la deuxième bride présente un deuxième talon formé au niveau de la deuxième zone d'appui.

La première zone d'appui est avantageusement située entre le joint d'étanchéité et les moyens de serrage, ce qui permet en particulier de bien protéger le joint vis-à-vis de l'environnement extérieur.

Le dispositif de liaison selon l'invention est en particulier adapté pour inclure un joint d'étanchéité présentant une restitution utile (Ru) comprise entre 0,02 mm et 0,1 mm.

Le dispositif de liaison selon l'invention peut être appliqué à une tuyauterie ou une enceinte contenant un fluide sous pression, en particulier dans le domaine spatial ou encore dans les secteurs industriels tels que la chimie, la pétrochimie ou le nucléaire qui impliquent l'utilisation d'équipements sous pression dans des conditions d'environnement qui peuvent être sévères.

### Brève description des dessins

D'autres caractéristiques et avantages de l'invention ressortiront de la description suivante de modes particuliers de réalisation, en référence aux dessins annexés, sur lesquels :
- la Figure 1 est une vue en perspective d'un exemple de liaison à brides connue,
- les Figures 2 et 3 sont des vues en coupe axiale d'un exemple de dispositif de liaison à brides connu, du type face-face, respectivement avant serrage et après serrage des boulons assurant une précontrainte,
- les Figures 4 et 5 sont des vues en demi-coupe axiale d'un exemple de dispositif connu de liaison à brides, du type comportant un talon unique, respectivement avant serrage et après serrage des boulons assurant une précontrainte,
- les Figures 6 et 7 sont des vues en demi-coupe axiale d'un premier exemple de dispositif de liaison étanche précontrainte à brides selon l'invention, du type à surfaces continues, respectivement avant serrage et après serrage des boulons assurant la précontrainte,
- les Figures 8 et 9 sont des vues en demi-coupe axiale d'un deuxième exemple de dispositif de liaison étanche précontrainte à brides selon l'invention, du type à deux talons réalisés sur la même bride, respectivement avant serrage et après serrage des boulons assurant la précontrainte,
- la Figure 10 est un diagramme présentant l'évolution simplifiée de l'effort de compression d'un joint en fonction de l'écrasement de celui-ci,
- les Figures 11 et 12 sont des vues en demi-coupe axiale d'un troisième exemple de dispositif de liaison étanche précontrainte à brides selon l'invention, du type à deux talons réalisés sur deux brides différentes, respectivement avant serrage et après serrage des boulons assurant la précontrainte,
- la Figure 13 est une vue en demi-coupe axiale montrant l'application d'un dispositif de liaison étanche selon l'invention à un réservoir de fluide sous pression,
- les Figures 14 et 15 montrent des vues de détail du dispositif de liaison étanche du réservoir de la Figure 13, respectivement avant et après serrage des goujons assurant la précontrainte,
- la Figure 16 est un graphique montrant la variation de la tension d'un goujon du dispositif des Figures 14 et 15 lors de la mise en pression, en fonction de la conicité des surfaces des brides du dispositif de liaison étanche, et
- la Figure 17 est un graphique montrant le délestage et la restitution utile d'un joint en fonction de la conicité des surfaces des brides du dispositif de liaison étanche des Figures 14 et 15.

### Description détaillée de modes particuliers de réalisation

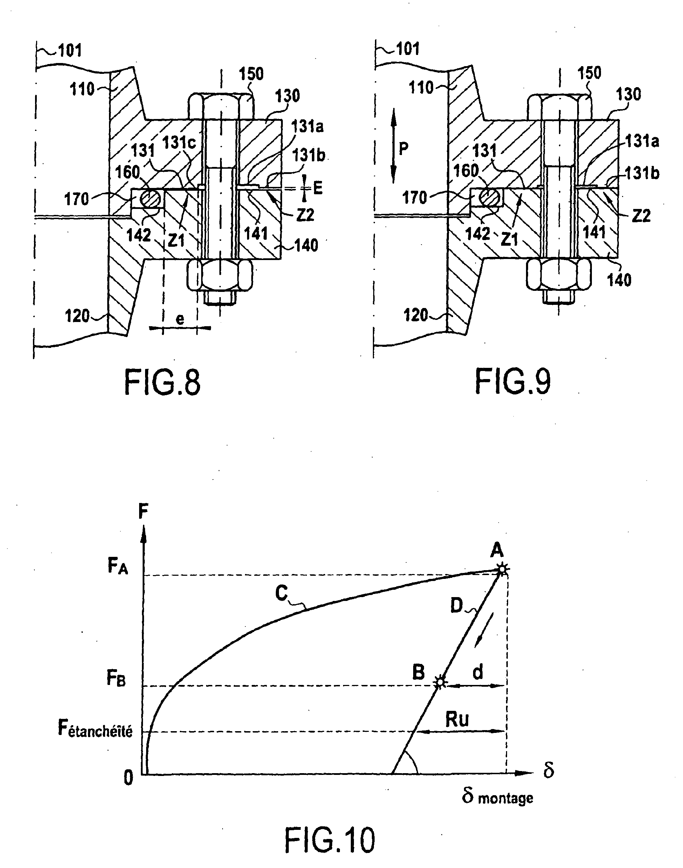

On se référera d'abord à la Figure 10 qui présente l'évolution simplifiée de l'effort de compression d'un joint en fonction de l'écrasement de celui-ci, dans des dispositifs de liaison à brides classiques tels que ceux décrits en références aux Figures 1 à 5.

La courbe C qui correspond à la phase entre les points O et A représente la compression du joint lors d'une phase d'écrasement du joint qui se produit lors du montage des brides et du serrage des éléments de liaison.

La courbe D montre une droite de déchargement avec, entre les points A et B, l'évolution du délestage de la liaison, noté d, c'est-à-dire la détente du joint par rapport à son écrasement δ obtenu lors du montage, lorsque, sous l'effet de la pression de service à l'intérieur des éléments de canalisation ou de réservoir reliés par la liaison à brides, l'effort exercé sur le joint passe d'une valeur F_{A}, au point A, à une valeur inférieure F_{B}, au point B.

Pour que la liaison soit étanche, la valeur F_{B} doit rester supérieure à l'effort limite d'étanchéité, noté F_{étanchéité}, qui correspond à la restitution utile Ru du joint.

La liaison reste étanche si la restitution utile Ru du joint reste supérieure au délestage d.

Dans le cas d'une liaison à brides connue du type face-face, telle que celle illustrée sur les Figures 2 et 3, le délestage du joint peut atteindre des valeurs supérieures à 0,10 mm, ce qui implique d'utiliser des joints spécifiques possédant une restitution utile supérieure à 0,10 mm ou de rigidifier la liaison à brides en l'alourdissant, ce qui constitue un handicap pour diverses applications, notamment dans le domaine spatial.

On décrira maintenant en référence aux Figures 6 et 7 un premier exemple de réalisation d'un dispositif de liaison étanche précontrainte à brides conforme à l'invention.

Dans cet exemple, des tronçons de canalisation ou de réservoir 110, 120 ayant un axe de révolution 101 sont reliés chacun à une bride annulaire 130 respectivement 140. Les brides 130, 140 sont traversées par des éléments de liaison 150 tels que boulons, vis, goujons ou similaires qui permettent d'exercer une précontrainte sur ces brides 130, 140.

La Figure 6 montre le dispositif de liaison avant serrage des éléments de liaison 150.

On voit que la face inférieure 131 de la bride supérieure 130, qui est essentiellement transversale à l'axe de révolution 101, est une surface continue, sans partie en retrait (à l'exception des ouvertures de passage des éléments de liaison 150). La face supérieure 141 de la bride inférieure 140 est située en regard de la face 131 de la bride 130 et est également une surface continue essentiellement transversale à l'axe de révolution 101, à l'exception des ouvertures de passage des éléments de liaison 150, et d'une partie en retrait 142 destinée à former le logement 170 du joint 160.

Il est à noter que les termes "inférieur" et "supérieur" sont utilisés par commodité en référence à la position des brides sur le dessin, mais la liaison à brides peut naturellement avoir n'importe quelle position par rapport à la verticale.

Dans la position initiale de la Figure 6, les surfaces 131 et 141 sont en contact sur une première zone Z1 au voisinage du joint 160, par exemple sur une distance qui peut être de l'ordre de quelques millimètres si le diamètre de la bride est inférieur ou égal à environ 200 mm ou de un à plusieurs centimètres si le diamètre de la bride est supérieur à environ 200 mm. En revanche, dans une zone Z2 située entre les moyens de liaison 150 et la périphérie des brides 130, 140, les surfaces 131, 141 sont écartées l'une de l'autre d'une certaine distance E, qui peut être de l'ordre de quelques dixièmes de millimètre, et peut être par exemple comprise entre 0,2 mm et 0,5 mm.

Après serrage des éléments de liaison 150 (Figure 7), l'espace libre entre les surfaces 131 et 141 précédemment divergentes dans la zone Z2 est fermé et les faces des brides 130 et 140 situées en regard l'une de l'autre sont en contact sur toute leur surface. Même lors de l'application d'une pression interne P à l'intérieur des éléments de canalisation 110, 120, il n'y a pas de décollement des surfaces 131 et 141 dans les zones Z1 et Z2.

La distance E dans la zone Z2 est déterminée de telle manière qu'après serrage des moyens de serrage 150, l'effort minimum exercé sur la zone d'appui Z2 est inférieur à l'effort minimum exercé sur la première zone d'appui 1, sans être nul et constitue 1 à 20 %, avantageusement 5 à 20 %, et de préférence 8 à 12 %, de l'effort minimum exercé sur la première zone d'appui Z1. De la sorte, en fonctionnement avec un champ de pression interne P on n'observe pas le phénomène de bâillement (ouverture du logement du joint) de la liaison observé sur une liaison de type face-face et le phénomène de délestage du joint est réduit à des valeurs par exemple de l'ordre de 0,06 mm, ce qui permet d'utiliser des joints standards par exemple dont la restitution utile est comprise entre 0,08 mm et 0,10 mm.

La répartition d'effort de serrage peut être obtenue de la façon suivante : à partir de calculs par éléments finis, connaissant l'effort minimum de serrage à exercer, en fonction de la pression et du chargement extérieur, sur la première zone d'appui Z1, on optimise la différence de hauteur entre les deux zones d'appui Z1 et Z2, ou l'angle dans le cas du mode de réalisation à bride conique de la Figure 6, en le paramétrant et en le faisant varier de manière à obtenir un effort compris entre 1 et 20% sur la deuxième zone d'appui Z2.

Dès lors qu'après serrage les surfaces en regard 131, 141 des brides 130, 140 sont en contact, il n'existe pas d'espace de pollution possible entre brides et il existe une bonne dissipation de la chaleur à travers les brides. Par ailleurs, sous l'influence de la pression interne, en fonctionnement, la pression de contact de la zone Z1 se déplace vers le diamètre extérieur au niveau de la zone Z2, mais néanmoins la surface de contact reste importante au niveau de la zone Z1 et on n'observe pas de décollement ou un décollement minime qui n'affecte pas la qualité d'étanchéité procurée par le joint.

Le profil des surfaces 131, 141 est défini par exemple par calcul par éléments finis de telle manière qu'après serrage, la pression de contact reste faible dans la zone Z2 et soit importante dans la zone Z1 située près du joint.

On décrira maintenant en référence aux Figures 8 et 9 un autre mode de réalisation de l'invention.

Sur les Figures 8 et 9, les éléments similaires à ceux du mode de réalisation des Figures 6 et 7 portent les mêmes numéros de référence et ne seront pas décrits à nouveau.

Le dispositif de liaison étanche précontrainte à brides des Figures 8 et 9 présente une bride 140 qui est identique à la bride 140 du dispositif des Figures 6 et 7. En revanche, la bride 130 du dispositif des Figures 8 et 9 comprend une surface inférieure 131 qui n'est pas continue mais comprend, à la suite de la zone Z1 où la surface 131c de la bride supérieure 130 qui constitue un premier talon, est en contact sur une longueur e avec la surface 141 de la bride inférieure 140, une partie en retrait 131a, suivie d'une partie d'extrémité 131b qui constitue un deuxième talon.

Dans la position de montage, avant serrage des boulons de liaison 150 (Figure 8), la surface 131c de la bride 130 est en contact avec la surface 141 de la bride 140 dans la zone Z1 sur la distance e, qui est par exemple de quelques millimètres si le diamètre de la bride est inférieur ou égal à environ 200 mm, ou de un à plusieurs centimètres si le diamètre de la bride est supérieur à environ 200 mm. Il existe par ailleurs un espace E, de l'ordre de quelques dixièmes de millimètre, par exemple de 0,3 mm à 0,8 mm, dans la zone Z2, entre le deuxième talon 131b de la bride 130 et la surface 141 de la bride 140 qui lui fait face.

Après serrage des moyens de serrage 150 (Figure 9), les surfaces 131c et 141 restent en contact dans la zone Z1 et le talon 131b vient lui-même en contact avec la surface 141 de la bride 140 de sorte qu'il n'existe pas d'espace ouvert à la périphérie des brides 130, 140.

Comme dans le cas du mode de réalisation des Figures 6 et 7, après serrage des boulons 150, l'effort minimum exercé sur la zone d'appui Z2 est inférieur à l'effort minimum exercé sur la zone d'appui Z1, sans être nul et constitue 1 à 20 %, avantageusement 5 à 20 %, et de préférence 8 à 12 %, de l'effort minimum exercé sur la zone d'appui Z1.

En fonctionnement, lorsqu'une pression P est exercée à l'intérieur des tronçons de canalisation 110, 120, on n'observe pas le bâillement de la liaison observé sur une liaison similaire mais de type face-face sans talon. Par ailleurs, une réalisation avec des talons 131c et 131b dans les zones Z1 et Z2 comme décrit précédemment, présente une fonction de limiteur de rotation des brides, grâce à l'appui fourni dans la zone Z2 par le talon extérieur 131b.

Au montage, on constate une localisation de la pression de contact près du diamètre du joint, dans la zone d'appui Z1. En fonctionnement, la pression de contact se déplace vers le diamètre extérieur mais le contact reste maintenu sur les deux talons 131b, 131c. Ceci permet de conserver une pression de contact plus proche du joint.

Un dispositif de liaison du type bi-talon, comme représenté sur les Figures 8 et 9, permet de diminuer de façon encore plus conséquente que le dispositif des Figures 6 et 7 le délestage du joint par rapport à une liaison face-face traditionnelle, ce qui permet d'utiliser des joints à plus faible restitution utile, par exemple de l'ordre de 0,05 mm ou même de restitution utile inférieure, par exemple de 0,02 mm dans le cas de brides de faible diamètre. D'une manière générale, on peut utiliser des joints d'une restitution utile inférieure à 0,1 mm.

Un dispositif de liaison étanche précontrainte à brides du type bi-talon présente une très grande rigidité et une déformée quasi constante entre le montage et le fonctionnement, tout en définissant un espace fermé face à la pollution extérieure.

La présence des deux surfaces de contact au niveau des deux zones d'appui Z1, Z2 situées au niveau des deux talons 131c, 131b permet de répartir au mieux la pression de contact, évite tout jeu et donne une grande souplesse dans la conception et le montage, grâce à un usinage facile et une possibilité d'être excessif lors du serrage des boulons puisque le deuxième talon 131b forme une butée de sécurité.

Comme cela ressort de la Figure 8, le talon extérieur 131b présente une hauteur plus limitée que le talon intérieur 131c, et c'est cette différence de niveau qui permet d'ajuster la précontrainte et de répartir les efforts de telle sorte que la charge à la périphérie de brides tende vers zéro (zone Z2) tandis que la charge est maintenue à un niveau élevé au niveau du joint (zone Z1).

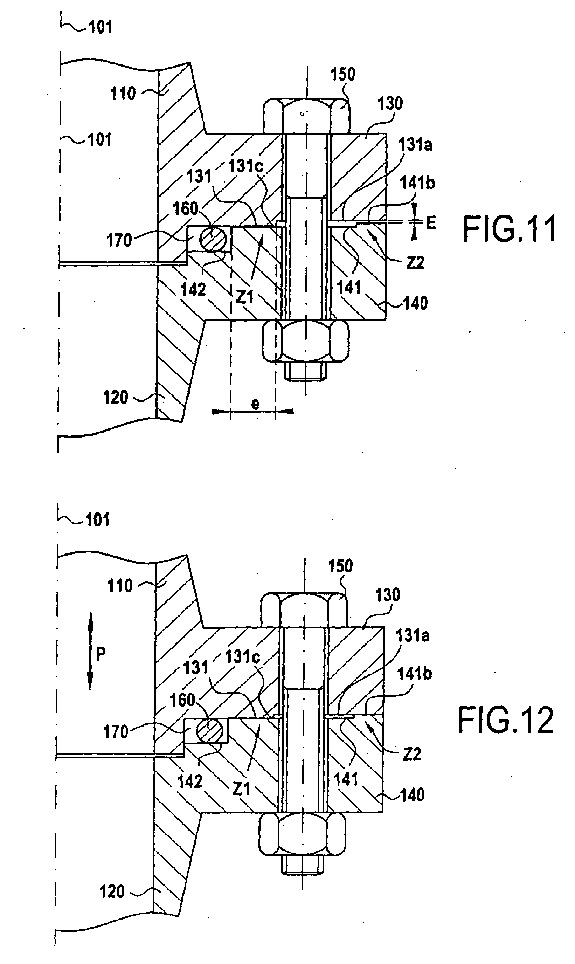

Les Figures 11 et 12 montrent une variante de réalisation du dispositif de liaison des Figures 8 et 9.

Dans le cas du mode de réalisation des Figures 11 et 12, les surfaces en regard 131, 141 des brides 130, 140 définissent également deux talons, mais ceux-ci ne sont pas réalisés sur la même surface.

Dans le mode de réalisation des Figures 11 et 12, la surface de contact 131 de la bride 130 comprend un seul talon 131c formé au niveau de la zone d'appui Z1, qui permet au montage, avant serrage des boulons 150, d'avoir un contact avec la surface 141 de la bride 140 sur une longueur e (Figure 11).

La bride 140 comprend elle-même un talon 141b formé en regard de la surface 131a de la bride 130 au niveau de la zone d'appui Z2, en ménageant un espace E avec cette surface 131a avant serrage des boulons 150 (Figure 11).

Après serrage des boulons 150, le talon 141b de la surface 141 de la bride 140 vient en butée contre la surface 131a de la bride 130, dans la zone d'appui Z2, contribuant ainsi à fermer l'espace entre les brides 130 et 140 à la périphérie de celles-ci (Figure 12).

Lors de la mise en pression interne P des tronçons de canalisation 110, 120, les talons 131c et 141b jouent exactement les mêmes rôles que les talons 131c et 131b du mode de réalisation des Figures 8 et 9.

Le fait de réaliser un seul talon par bride peut dans certains cas faciliter la fabrication des brides 130, 140, mais du point de vue fonctionnel, le mode de réalisation des Figures 11 et 12 est strictement équivalent à celui des Figures 8 et 9.

Dans le cas du mode de réalisation des Figures 11 et 12, la longueur e de la zone d'appui Z1 peut être de l'ordre de quelques millimètres ou quelques centimètres tandis que l'espace libre E entre le talon 141b et la surface 131a située en regard, avant serrage des boulons 150, peut être typiquement de l'ordre de 0,05 mm. La hauteur du talon 141b, comme celle du talon 131b des Figures 8 et 9, peut être également typiquement de l'ordre de 0,05 mm, de sorte que la hauteur du talon 131c peut être typiquement de l'ordre de 0,1 mm.

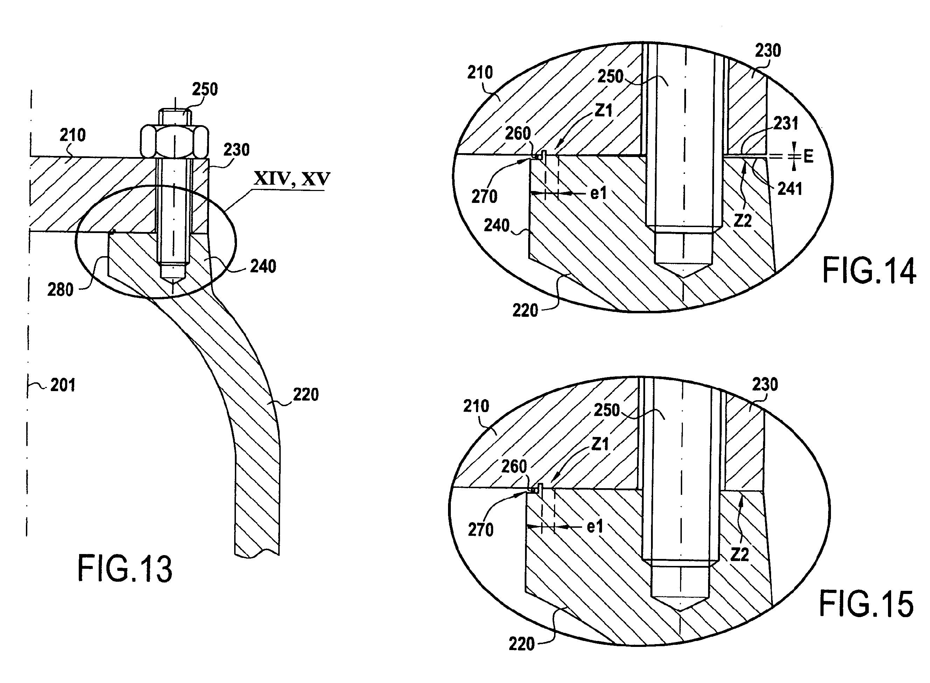

Les Figures 13 à 15 montrent un exemple d'application de l'invention a une enceinte destinée à contenir un fluide, tel que de l'hydrogène, sous une pression par exemple de l'ordre de 320 bar.

Dans le cas de cette application, une bride 230 est constituée par la partie périphérique d'un tampon ou couvercle 210. La bride 230 repose sur une bride 240 constituée par la partie supérieure du réservoir 220, la bride 240 délimitant une ouverture interne ou trou d'homme 280. Les brides 230 et 240 sont reliées entre elles par des goujons 250 répartis à la périphérie de ces brides annulaires 230 et 240.

Dans l'exemple considéré, l'ouverture 280 présente un diamètre de 500 mm et un joint 260 placé dans un logement de joint 270 au voisinage de l'ouverture 280 présente un diamètre de 520 mm.

Les goujons 250 sont répartis sur un cercle de diamètre 900 mm et sont au nombre de 16. La tension par goujon est de 565 kN.

Le joint torique utilisé présente un diamètre de tore de 9,4 mm et a une restitution utile de 0,09 mm. L'effort d'écrasement du joint est de 580 N/mm.

La configuration de la liaison visible sur la Figure 14 avant serrage des goujons 250 et sur la Figure 15 après serrage des goujons 250, est semblable à celle décrite précédemment en référence aux Figures 6 et 7.

Ainsi, la surface inférieure 231 de la partie 230 du tampon 210 est usinée de telle manière que lors de l'assemblage du tampon 210 avec le réservoir 220, et avant serrage des goujons 250, il n'y a pas de contact entre l'ensemble de la surface inférieure 231 de la bride 230 et de la surface supérieure 241 de la bride 240, contrairement au cas d'une liaison du type face-face, mais il existe une divergence entre ces surfaces 231 et 241 qui ne sont en contact au départ que sur une distance e, par exemple de l'ordre de 12 mm, dans une zone d'appui Z1 située au voisinage du joint 260, tandis qu'à la périphérie des brides 230, 240, à l'extérieur des goujons 250, dans une zone Z2, il existe un espace libre E, par exemple compris entre 0,3 mm et 0,6 mm entre les surfaces 231 et 241 (Figure 14).

Après serrage des goujons 250, il n'existe plus d'espace libre E dans la zone d'appui Z2 et la liaison est fermée de façon étanche avec une précontrainte qui augmente la marge d'étanchéité et réduit le délestage du joint 260.

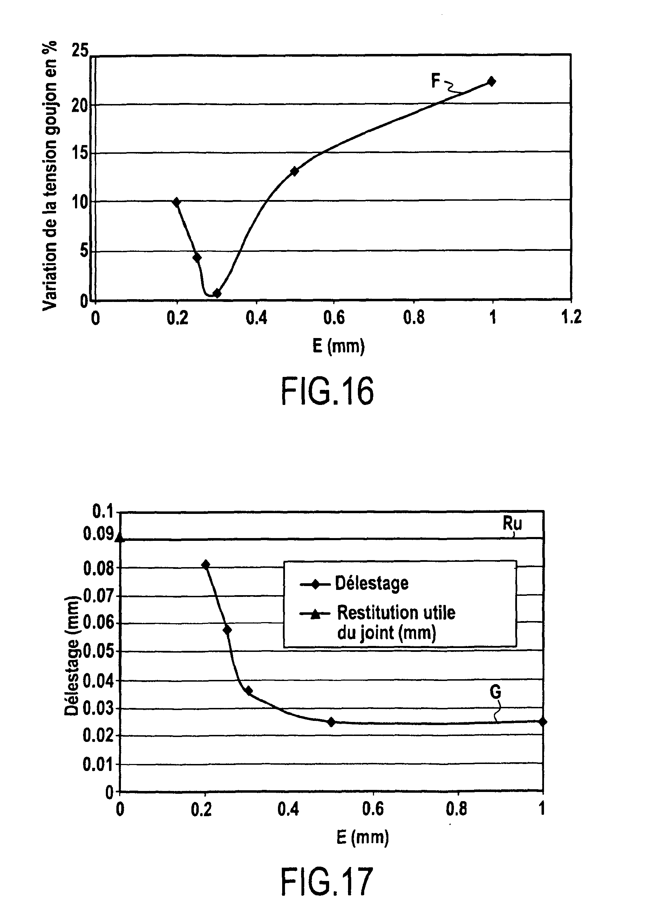

La Figure 17 montre, pour un joint 260 présentant une restitution utile Ru de 0,09 mm, la valeur du délestage de ce joint en fonction de la conicité de la liaison, c'est-à-dire de la valeur de l'espace libre E entre les surfaces 231 et 241 dans la zone d'appui Z2, avant serrage des goujons 250, pour l'exemple précité.

On voit sur la courbe G que des valeurs de E comprises entre 0,3 mm et 1 mm permettent d'obtenir un délestage compris entre 0,025 mm et 0,035 mm, c'est-à-dire très inférieur à la restitution utile Ru du joint, ce qui garantit une bonne étanchéité, sans nécessité de faire appel à un joint de restitution utile plus élevée.

On constate ainsi que plus la valeur de E est grande, moins le délestage est important. Toutefois, si l'on prend également en compte la variation de la tension d'un goujon lors de la mise en pression en fonction de la conicité (valeur de l'espace libre E), comme présenté sur la courbe F de la Figure 16, on voit qu'une ouverture de cône (espace libre E) d'environ 0,3 mm permet, pour l'exemple considéré, de minimiser la variation de la tension du goujon jusqu'à une valeur d'environ 1 % alors que cette variation de tension peut atteindre 15 % pour des valeurs de E de l'ordre de 0,6 mm.

Ainsi, dans l'exemple considéré le choix d'une valeur de E de 0,3 mm permet d'obtenir un délestage de 0,036 mm (Figure 17), avec une très faible variation de la tension du goujon (de l'ordre de 0,7 %).

Un délestage de 0,036 mm représente une marge de 150 % par rapport à la restitution utile du joint de 0,09 mm. A l'inverse, une liaison classique de type face-face (qui correspondrait à une valeur de l'espace libre E égale à zéro) donnerait lieu à une augmentation de 52 % de la tension d'un goujon 250 lors de la mise en pression et à un délestage de l'ordre de 0,21 mm qui n'est pas compatible avec un joint de restitution utile de 0,09 mm. Avec une liaison classique de type face-face, il faudrait donc concevoir un joint spécifique présentant une restitution utile supérieure à environ 0,3 mm, du fait de l'ouverture importante créée au droit du joint dans une telle liaison classique face-face, tandis qu'une liaison conforme à l'invention telle que celle précédemment décrite ne présente quasiment pas d'ouverture au niveau du logement de joint 270, la déformée du tampon épousant la déformée de la bouteille au niveau des brides 230, 240.

Il est enfin à noter que dans les dispositifs de liaison étanche précontrainte à brides, les brides sont avantageusement réalisées de façon monobloc sans élément rapporté autre que les organes de serrage 150, 250, ce qui leur confère une excellente résistance mécanique en présence de vibrations.

## Revendications

1. Dispositif de liaison étanche précontrainte à brides, comprenant une première bride (130 ; 230) présentant une première surface de contact (131 ; 231), une deuxième bride (140 ; 240) présentant une deuxième surface de contact (141 ; 241) située en regard de ladite première surface de contact (131 ; 231), un joint d'étanchéité (160 ; 260), disposé dans un logement de joint (170 ; 270) ménagé entre lesdites première et deuxième surfaces de contact (131, 141 ; 231, 241) et des moyens (150 ; 250) de serrage des première et deuxième brides (130, 140 ; 230, 240) disposés entre le logement de joint (170 ; 270) et la périphérie des première et deuxième brides (130, 140 ; 230, 240) pour venir mettre en contact entre elles au moins une partie des première et deuxième surfaces de contact (131, 141 ; 231, 241),
**caractérisé en ce que** les première et deuxième surfaces de contact (131, 141 ; 231, 241) présentent au moins une première zone d'appui (Z1) située au voisinage du joint d'étanchéité (160 ; 260) et une deuxième zone d'appui (Z2) située entre les moyens de serrage (150 ; 250) et la périphérie des première et deuxième brides (130, 140 ; 230, 240), les première et deuxième zones d'appui (Z1, Z2) présentant une différence de hauteur (E) qui est déterminée à partir de l'effort minimum de serrage à exercer sur la première zone d'appui (Z1) en fonction de la pression et du chargement extérieur, de telle sorte qu'après serrage des moyens de serrage (150 ; 250), l'effort minimum exercé sur la deuxième zone d'appui (Z2) soit inférieur à l'effort minimum exercé sur la première zone d'appui (Z1) sans être nul et constitue 1 à 20 % de l'effort minimum exercé sur la première zone d'appui (Z1),
et **en ce que** le joint d'étanchéité (160, 260) présente une restitution utile (Rᵤ) inférieure à 0,1 mm.

2. Dispositif selon la revendication 1, **caractérisé en ce que** la première zone d'appui (Z1) est située entre le joint d'étanchéité (160 ; 260) et les moyens de serrage (150 ; 250).

3. Dispositif selon la revendication 1, **caractérisé en ce que** les première et deuxième surfaces de contact (131, 141 ; 231, 241) définissent des première et deuxième zones d'appui (Z1, Z2) telles qu'après serrage des moyens de serrage (150 ; 250), l'effort minimum exercé sur la deuxième zone d'appui (Z2) constitue 5 à 20 % de l'effort minimum exercé sur la première zone d'appui (Z1).

4. Dispositif selon la revendication 1, **caractérisé en ce que** les première et deuxième surfaces de contact (131, 141 ; 231, 241) définissent des première et deuxième zones d'appui (Z1, Z2) telles qu'après serrage des moyens de serrage (150 ; 250), l'effort minimum exercé sur la deuxième zone d'appui (22) constitue 8 à 12 % de l'effort minimum exercé sur la première zone d'appui (Z1).

5. Dispositif selon l'une quelconque des revendications 1 à 4, **caractérisé en ce que**, avant serrage des moyens de serrage (150 ; 250), la distance (E) entre les première et deuxième surfaces de contact (131, 141 ; 231, 241) au niveau de la deuxième zone d'appui (Z2) est plus grande que la distance entre les première et deuxième surfaces de contact (131, 141 ; 231, 241) au niveau de la première zone d'appui (Z1).

6. Dispositif selon la revendication 5, **caractérisé en ce que** la distance (E) est comprise entre 0,2 mm et 0,5 mm.

7. Dispositif selon l'une quelconque des revendications 1 à 6, **caractérisé en ce que** les première et deuxième surfaces de contact (131, 141 ; 231, 241) sont des surfaces continues entre la première et la deuxième zones d'appui (Z1, Z2).

8. Dispositif selon l'une quelconque des revendications 1 à 6, **caractérisé en ce qu'**au moins l'une des première et deuxième surfaces de contact (131, 141) définit un talon (131c, 131b ; 141b) au moins au niveau de l'une des première et deuxième zones d'appui (Z1, Z2).

9. Dispositif selon la revendication 8, **caractérisé en ce que** la première surface de contact (131) de la première bride (130) comprend un premier talon (131c) formé au niveau de la première zone d'appui (Z1) et un deuxième talon (131b) formé au niveau de la deuxième zone d'appui (Z2) tandis que la deuxième surface de contact (141) de la deuxième bride (140) présente une surface uniforme continue.

10. Dispositif selon la revendication 8, **caractérisé en ce que** la première surface de contact (131) de la première bride (130) comprend un premier talon (131c) formé au niveau de la première zone d'appui (Z1) tandis que la deuxième surface de contact (141) de la deuxième bride (140) présente un deuxième talon (141b) formé au niveau de la deuxième zone d'appui (Z2).

11. Dispositif selon l'une quelconque des revendications 1 à 10, **caractérisé en ce que** les moyens de serrage (150 ; 250) comprennent un ensemble de boulons disposés perpendiculairement aux première et deuxième brides (130, 140 ; 230, 240).

12. Dispositif selon l'une quelconque des revendications 1 à 11, **caractérisé en ce que** le joint d'étanchéité (160 ; 260) présente une restitution utile (Rᵤ) comprise entre 0,02 mm et 0,1 mm.

13. Dispositif selon l'une quelconque des revendications 1 à 12, **caractérisé en ce qu'**il est appliqué à une tuyauterie ou une enceinte contenant un fluide sous pression.

14. Procédé de réalisation d'une liaison étanche précontrainte à brides, comprenant au moins les étapes suivantes :
(a) préparer une première bride annulaire (130 ; 230) présentant une première surface de contact (131 ; 231),
(b) préparer une deuxième bride annulaire (140 ; 240) présentant une deuxième surface de contact (141 ; 241),
(c) insérer un joint d'étanchéité (160 ; 260) dans un logement de joint (170 ; 270) ménagé entre lesdites première et deuxième surfaces de contact (131, 141 ; 231 ; 241),
(d) disposer des moyens (150 ; 250) de serrage des première et deuxième brides (130, 140 ; 230, 240),
**caractérisé en ce qu'**il comprend en outre les étapes suivantes :
(e) choisir un joint d'étanchéité (160 ; 260) présentant une restitution utile (Rᵤ) inférieure à 0,1 mm,
(f) définir des première et deuxième surfaces de contact (131, 141 ; 231 ; 241), présentant au moins une première zone d'appui (Z1) située au voisinage du joint d'étanchéité (160 ; 260) et une deuxième zone d'appui (Z2) située entre les moyens de serrage (150 ; 250) et la périphérie des première et deuxième brides (130, 140 ; 230, 240), les première et deuxième surfaces d'appui (Z1, Z2) présentant une différence de hauteur (E) avant serrage des moyens de serrage (150 ; 250), la différence de hauteur (E) étant déterminée par un paramétrage utilisant des calculs par éléments finis à partir de l'effort minimum de serrage à exercer sur la première zone d'appui (Z1) en fonction de la pression et du chargement extérieur, de telle sorte qu'après serrage des moyens de serrage (150 ; 250), l'effort minimum exercé sur la deuxième zone d'appui (Z2) soit inférieur à l'effort minimum exercé sur la première zone d'appui (Z1) sans être nul et constitue 1 à 20% de l'effort minimum exercé sur la première zone d'appui (Z1), et
(g) procéder au serrage des moyens de serrage (150 ; 250) pour mettre en contact les surfaces de contact (131, 141 ; 231 ; 241) au niveau à la fois de la première et de la deuxième zone d'appui (Z1, Z2).

15. Procédé selon la revendication 14, **caractérisé en ce que** la distance (E) est de quelques dixièmes de millimètres.

## Claims

1. A flanged prestressed leaktight connection device comprising a first flange (130; 230) presenting a first contact surface (131; 231), a second flange (140; 240) presenting a second contact surface (141; 241) situated facing said first contact surface (131; 231), a sealing gasket (160; 260) disposed in a gasket housing (170; 270) formed between said first and second contact surfaces (131, 141; 231, 241), and clamping means (150; 250) for clamping together the first and second flanges (130, 140; 230, 240), the clamping means (150; 250) being disposed between the gasket housing (170; 270) and the periphery of the first and second flanges (130, 140; 230, 240) so as to put into contact at least a portion of the first and second contact surfaces (131, 141; 231, 241) between the flanges,
**characterized in that** the first and second contact surfaces (131, 141; 231, 241) present at least a first bearing zone (Z1) situated in the vicinity of the sealing gasket (160; 260) and a second bearing zone (Z2) situated between the clamping means (150; 250) and the periphery of the first and second flanges (130, 140; 230, 240), the first and second bearing zones (Z1, Z2) presenting a difference in height (E) that is determined from the minimum clamping force to be exerted on the first bearing zone (Z1) as a function of the pressure and of the external loading, such that after the clamping means (150; 250) have been tightened, the minimum force exerted on the second bearing zone (Z2) is less than the minimum force exerted on the first bearing zone (Z1), but without being zero and constitutes 1% to 20% of the minimum force exerted on the first bearing zone (Z1); and
**in that** the sealing gasket (160; 260) presents usable restitution (Rᵤ), that is less than 0.1 mm.

2. A device according to claim 1, **characterized in that** the first bearing zone (Z1) is situated between the sealing gasket (160; 260) and the clamping means (150; 250).

3. A device according to claim 1, **characterized in that** the first and second contact surfaces (131, 141; 231, 241) define first and second bearing zones (Z1, Z2) such that, after the clamping means (150; 250) have been tightened, the minimum force exerted on the second bearing zone (Z2) constitutes 5% to 20% of the minimum force exerted on the first bearing zone (Z1).

4. A device according to claim 1, **characterized in that** the first and second contact surfaces (131, 141; 231, 241) define first and second bearing zones (Z1, Z2) such that, after the clamping means (150; 250) have been tightened, the minimum force exerted on the second bearing zone (Z2) constitutes 8% to 12% of the minimum force exerted on the first bearing zone (Z1).

5. A device according to any one of claims 1 to 4, **characterized in that**, prior to the clamping means (150; 250) being tightened, the distance (E) between the first and second contact surfaces (131, 141; 231, 241) in the second bearing zone (Z2) is greater than the distance between the first and second contact surfaces (131, 141; 231, 241) in the first bearing zone (Z1).

6. A device according to claim 5, **characterized in that** the distance (E) lies in the range 0.2 mm to 0.5 mm.

7. A device according to any one of claims 1 to 6, **characterized in that** the first and second contact surfaces (131, 141; 231, 241) are continuous surfaces between the first and second bearing zones (Z1, Z2).

8. A device according to any one of claims 1 to 6, **characterized in that** at least one of the first and second contact surfaces (131, 141) defines a land (131c, 131b; 141b) at least in one of the first and second bearing zones (Z1, Z2).

9. A device according to claim 8, **characterized in that** the first contact surface (131) of the first flange (130) has a first land (131c) formed in the first bearing zone (Z1) and a second land (131b) formed in the second bearing zone (Z2), while the second contact surface (141) of the second flange (140) presents a continuous uniform surface.

10. A device according to claim 8, **characterized in that** the first contact surface (131) of the first flange (130) includes a first land (131c) formed in the first bearing zone (Z1), while the second contact surface (141) of the second flange (140) presents a second land (141b) formed in the second bearing zone (Z2).

11. A device according to any one of claims 1 to 10, **characterized in that** the clamping means (150; 250) comprise a set of bolts disposed perpendicularly to the first and second flanges (130, 140; 230, 240).

12. A device according to any one of claims 1 to 11, **characterized in that** the sealing gasket (160; 260) presents usable restitution (Rᵤ) lying in the range 0.02 mm to 0.1 mm.

13. A device according to any one of claims 1 to 12, **characterized in that** it is applied to pipework or to an enclosure containing a fluid under pressure.

14. A flanged prestressed leaktight connection method comprising at least the following steps:
(a) preparing a first annular flange (130; 230) presenting a first contact surface (131; 231);
(b) preparing a second annular flange (140; 240) presenting a second contact surface (141; 241);
(c) inserting a sealing gasket (160; 260) in a gasket housing (170; 270) formed between said first and second contact surfaces (131, 141; 231, 241);
(d) disposing clamping means (150; 250) for clamping together the first and second flanges (130, 140; 230, 240);
**characterized in that** said method further comprises the following steps:
(e) choosing a sealing gasket (160; 260) presenting a usable restitution (Rᵤ), that is less than 0.1 mm;
(f) defining first and second contact surfaces (131, 141; 231, 241), presenting at least a first bearing zone (Z1) situated in the vicinity of the sealing gasket (160; 260) and a second bearing zone (Z2) situated between the clamping means (150; 250) and the periphery of the first and second flanges (130, 140; 230, 240), the first and second bearing zones (Z1, Z2) presenting a difference in height (E) before the clamping means (150; 250) have been tightened, the difference in height (E) being determined by a parameterization using calculations based on finite elements from the minimum clamping force to be exerted on the first bearing zone (Z1) as a function of the pressure and of the external loading, such that after the clamping means (150; 250) have been tightened, the minimum force exerted on the second bearing zone (Z2) is less than the minimum force exerted on the first bearing zone (Z1), but without being zero and constitutes 1% to 20% of the minimum force exerted on the first bearing zone (Z1); and
(g) tightening the clamping means (150; 250) so as to put into contact the contact surfaces (131, 141; 231, 241) both in the first and second bearing zones (Z1, Z2).

15. Method according to claim 14, **characterized in that** the distance (E) is of the order of a few tenths of a millimeter.

## Patentansprüche

1. Vorrichtung zum dichten vorgespannten Verbinden mit Flanschen, umfassend einen ersten Flansch (130; 230), der eine erste Kontaktfläche (131; 231) besitzt, einen zweiten Flansch (140; 240), der eine zweite Kontaktfläche (141; 241) besitzt, die sich gegenüber der ersten Kontaktfläche (131; 231) befindet, eine Dichtung (160; 260), die in einer Dichtungsaufnahme (170; 270) angeordnet ist, die zwischen der ersten und der zweiten Kontaktfläche (131, 141; 231, 241) eingerichtet ist, und Spannmittel (150; 250) des ersten und des zweiten Flansches (130, 140; 230, 240), die zwischen der Dichtungsaufnahme (170; 270) und dem Umfang des ersten und des zweiten Flansches (130, 140; 230, 240) angeordnet sind, um mindestens einen Teil der ersten und der zweiten Kontaktfläche (131, 141; 231, 241) miteinander in Kontakt zu bringen,
**dadurch gekennzeichnet, daß** die erste und die zweite Kontaktfläche (131, 141; 231, 241) mindestens eine erste Stützzone (Z1), die in der Nähe der Dichtung (160; 260) liegt, und eine zweite Stützzone (Z2) umfassen, die zwischen den Spannmitteln (150; 250) und dem Umfang des ersten und des zweiten Flansches (130, 140; 230 240) liegt, wobei die erste und die zweite Stützzone (Z1, Z2) einen Höhenunterschied (E) aufweisen, der ausgehend von der Mindestspannkraft, die auf die erste Stützzone (Z1) in Abhängigkeit von dem Druck und der externen Belastung auszuüben ist, bestimmt wird, so daß nach dem Spannen der Spannmittel (150; 250) die Mindestkraft, die auf die zweite Stützzone (Z2) ausgeübt wird, kleiner ist als die Mindestkraft, die auf die erste Stützzone (Z1) ausgeübt wird, ohne gleich null zu sein, und 1 bis 20 % der Mindestkraft ausmacht, die auf die erste Stützzone (Z1) ausgeübt wird,
und daß die Dichtung (160; 260) eine Nutzrückbildung (Rᵤ) kleiner als 0,1 mm aufweist.

2. Vorrichtung nach Anspruch 1, **dadurch gekennzeichnet, daß** die erste Stützzone (Z1) zwischen der Dichtung (160; 260) und den Spannmitteln (150; 250) liegt.

3. Vorrichtung nach Anspruch 1, **dadurch gekennzeichnet, daß** die erste und die zweite Kontaktfläche (131, 141; 231, 241) eine erste und eine zweite Stützzone (Z1, Z2) derart definieren, daß die Mindestkraft, die nach dem Spannen der Spannmittel (150; 250) auf die zweite Stützzone (Z2) ausgeübt wird, 5 bis 20 % der Mindestkraft, die auf die erste Stützzone (Z1) ausgeübt wird, ausmacht.

4. Vorrichtung nach Anspruch 1, **dadurch gekennzeichnet, daß** die erste und zweite Kontaktfläche (131, 141; 231, 241) eine erste und eine zweite Stützzone (Z1, Z2) derart definieren, daß die Mindestkraft, die nach dem Spannen der Spannmittel (150; 250) auf die zweite Stützzone (Z2) ausgeübt wird, 8 bis 12 % der Mindestkraft, die auf die erste Stützzone (Z1) ausgeübt wird, ausmacht.

5. Vorrichtung nach einem der Ansprüche 1 bis 4, **dadurch gekennzeichnet, daß** vor dem Spannen der Spannmittel (150; 250) die Entfernung (E) zwischen der ersten und der zweiten Kontaktfläche (131, 141; 231, 241) auf dem Niveau der zweiten Stützzone (Z2) größer ist als die Entfernung zwischen der ersten und der zweiten Kontaktfläche (131, 141; 231, 241) auf dem Niveau der ersten Stützzone (Z1).

6. Vorrichtung nach Anspruch 5, **dadurch gekennzeichnet, daß** die Entfernung (E) zwischen 0,2 mm und 0,5 mm liegt.

7. Vorrichtung nach einem der Ansprüche 1 bis 6, **dadurch gekennzeichnet, daß** die erste und die zweite Kontaktfläche (131, 141; 231, 241) ununterbrochene Flächen zwischen der ersten und der zweiten Stützzone (Z1, Z2) sind.

8. Vorrichtung nach einem der Ansprüche 1 bis 6, **dadurch gekennzeichnet, daß** zumindest die erste oder die zweite Kontaktfläche (131, 141) einen Absatz (131 c, 131 b; 141 b) auf mindestens dem Niveau der ersten oder der zweiten Stützzone (Z1, Z2) definiert.

9. Vorrichtung nach Anspruch 8, **dadurch gekennzeichnet, daß** die erste Kontaktfläche (131) des ersten Flansches (130) einen ersten Absatz (131 c), der auf dem Niveau der ersten Stützzone (Z1) ausgebildet ist, und einen zweiten Absatz (131 b) aufweist, der auf dem Niveau der zweiten Stützzone (Z2) ausgebildet ist, während die zweite Kontaktfläche (141) des zweiten Flansches (140) eine ununterbrochene gleichförmige Fläche bildet.

10. Vorrichtung nach Anspruch 8, **dadurch gekennzeichnet, daß** die erste Kontaktfläche (131) des ersten Flansches (130) einen ersten Absatz (131 c) aufweist, der auf dem Niveau der ersten Stützzone (Z1) ausgebildet ist, während die zweite Kontaktfläche (141) des zweiten Flansches (140) einen zweiten Absatz (141 b) aufweist, der auf dem Niveau der zweiten Stützzone (Z2) ausgebildet ist.

11. Vorrichtung nach einem der Ansprüche 1 bis 10, **dadurch gekennzeichnet, daß** die Spannmittel (150; 250) eine Einheit von Bolzen aufweist, die senkrecht zu dem ersten und zu dem zweiten Flansch (130, 140; 230, 240) angeordnet sind.

12. Vorrichtung nach einem der Ansprüche 1 bis 11, **dadurch gekennzeichnet, daß** die Dichtung (160; 260) eine Nutzrückbildung (Rᵤ) zwischen 0,02 mm und 0,1 mm aufweist.

13. Vorrichtung nach einem der Ansprüche 1 bis 12, **dadurch gekennzeichnet, daß** sie an eine Rohrleitung oder einen Einschluß, der ein Fluid unter Druck enthält, angewandt ist.

14. Verfahren zum Herstellen einer vorgespannten dichten Verbindung mit Flanschen, das mindestens die folgenden Schritte aufweist:
(a) Vorbereiten eines ersten ringförmigen Flansches (130; 230), der eine erste Kontaktfläche (131; 231) aufweist,
(b) Vorbereiten eines zweiten ringförmigen Flansches (140; 240), der eine zweite Kontaktfläche (141; 241) aufweist,
(c) Einfügen einer Dichtung (160; 260) in eine Dichtungsaufnahme (170; 270), die zwischen der ersten und der zweiten Kontaktfläche (131, 141; 231, 241) eingerichtet ist,
(d) Anordnen der Spannmittel (150; 250) des ersten und des zweiten Flansches (130, 140; 230, 240),
**dadurch gekennzeichnet, daß** es ferner die folgenden Schritte aufweist:
(e) Auswählen einer Dichtung (160; 260), die eine Nutzrückbildung (Rᵤ) kleiner als 0,1 mm aufweist,
(f) Definieren der ersten und der zweiten Kontaktfläche (131, 141; 231, 241), die mindestens eine erste Stützzone (Z1) aufweisen, die sich in der Nähe der Dichtung (160; 260) befindet, und eine zweite Stützzone (Z2), die zwischen den Spannmitteln (150; 250) und dem Umfang des ersten und des zweiten Flansches (130, 140; 230, 240) liegt, wobei die erste und die zweite Stützzone (Z1, Z2) einen Höhenunterschied (E) vor dem Spannen der Spannmittel (150; 52) aufweisen, wobei der Unterschied (E) durch ein Parametrieren bestimmt wird, das Berechnungen mittels finiter Elemente ausgehend von der Mindestspannkraft verwendet, die auf die erste Stützzone (Z1) in Abhängigkeit von dem Druck und der externen Belastung anzuwenden ist, so daß die Mindestkraft, die nach dem Spannen der Spannmittel (150; 250) auf die zweite Stützzone (Z2) ausgeübt wird, kleiner ist als die Mindestkraft, die auf die erste Stützzone (Z1) ausgeübt wird, ohne gleich null zu sein und die 1 bis 20 % der Mindestkraft, die auf die erste Stützzone (Z1) ausgeübt wird, ausmacht und
(g) Ausführen des Spannens der Spannmittel (150; 250), um die Kontaktflächen (131, 141; 231, 241) gleichzeitig auf dem Niveau der ersten und der zweiten Stützzone (Z1, Z2) in Kontakt zu bringen.

15. Verfahren nach Anspruch 14, **dadurch gekennzeichnet, daß** die Entfernung (E) einige Zehntel Millimeter beträgt.
